# EUROPÄISCHE PATENTANMELDUNG

(11) **EP 0 839 764 A2**
(43) Veröffentlichungstag der Anmeldung: **06.05.1998**
(21) Anmeldenummer: 97118180.5
(22) Anmeldetag: 20.10.1997
(51) Int. Cl.: C02F 3/06

(54) **Verfahren zur Reinigung von Abwasser und Kleinkläranlage zur Durchführung des Verfahrens**

(30) Priorität: 02.11.1996 DE 19645269
(71) Anmelder: RHEBAU Rheinische Beton- und Bauindustrie GmbH & Co., 41541 Dormagen (DE)
(72) Erfinder: Dorgeloh, Elmar Dipl.-Ing., 52064 Aachen (DE); Ehlers, Angela Dipl.-Ing., 52068 Aachen (DE); Gester, Thomas Dipl.-Ing., 41564 Kaarst (DE); Galle, Michael, 41836 Hückelhoven (DE)
(74) Vertreter: Döring, Wolfgang, Dr.-Ing. Patentanwälte Hauck, Graalfs, Wehnert, Döring, Siemons

(57) **Zusammenfassung**

Es werden ein Verfahren zur Reinigung von Abwasser und eine Kläranlage, insbesondere Kleinkläranlage oder kleine Kläranlage, zur Durchführung dieses Verfahrens beschrieben. Bei dem Verfahren wird das Abwasser in eine Kammer eingeführt und mit einem in der Kammer befindlichen Festbett kontaktiert. Das gereinigte Abwasser wird aus der Kammer herausgeführt. Das Festbett wird von unten über eine Belüftungseinrichtung mit Sauerstoff oder einem Sauerstoffträger angeströmt und durchströmt. Wesentlich ist, daß das Abwasser zwischen der Belüftungseinrichtung und der Festbettunterseite in die Kammer eingeführt wird. Hierdurch ergibt sich eine besonders effektive und gleichmäßige Verteilung des Abwassers und Sauerstoffs bzw. Sauerstoffträgers über das Festbett.

## Beschreibung

Die vorliegende Erfindung betrifft ein Verfahren zur Reinigung von Abwasser, bei dem das Abwasser in eine Kammer eingeführt, mit einem in der Kammer befindlichen Festbett kontaktiert und das gereinigte Abwasser aus der Kammer herausgeführt wird, wobei das Festbett von unten über eine Belüftungseinrichtung mit Sauerstoff oder einem Sauerstoffträger angeströmt und durchströmt wird.

Ein derartiges Verfahren ist aus der AT 000 107 U1 bekannt. Bei dem bekannten Verfahren fließt vorgeklärtes Abwasser über den Rand einer die Abwasserreinigungskammer von einer Vorklärkammer trennenden Wand in die Abwasserreinigungskammer ein und tritt mit dem in der Kammer befindlichen Festbett in Kontakt. Das Festbett wird von unten über eine Belüftungseinrichtung mit Sauerstoff oder einen Sauerstoffträger angeströmt. Durch die Belüftungseinrichtung wird die Kammer in einem aeroben Milieu gehalten. Auf dem Festbett bildet sich ein sogenannter biologischer Rasen aus. Das auf diese Weise biologisch gereinigte Abwasser wird über eine in einer weiteren Begrenzungswand der Abwasserreinigungskammer vorgesehene Öffnung aus der Abwasserreinigungskammer herausgeführt.

Als Festbett können bei einem derartigen Verfahren beispielsweise Schüttungen oder Pakete aus anorganischen oder organischen Materialien zur Anwendung gelangen. Das Schüttgut kann die Form von Kugeln, Prismen, Würfeln, Stäben o.dgl. besitzen. Bevorzugt finden entsprechende Kunststoffkörper Verwendung. Die nachfolgend beschriebene Erfindung ist in keiner Weise auf eine spezielle Art eines Festbettes beschränkt. Der hier verwendete Begriff "Sauerstoffträger" bedeutet in erster Linie Luft. Dies schließt jedoch nicht aus, daß auch andere geeignete Sauerstoffträger zur Anwendung gelangen können. Dementsprechend ist der verwendete Begriff "Belüftungseinrichtung" so zu verstehen, daß damit Sauerstoff, Luft oder andere Sauerstoffträger als Luft in die Abwasserreinigungskammer eingeführt werden können.

Der Erfindung liegt die Aufgabe zugrunde, ein Verfahren bzw. eine Kläranlage zu schaffen, das bzw. die eine besonders effektive und gleichmäßige Abwasserverteilung über das Festbett sicherstellt.

Diese Aufgabe wird erfindungsgemäß bei einem Verfahren der eingangs beschriebenen Art dadurch gelöst, daß das Abwasser zwischen der Belüftungseinrichtung und der Festbettunterseite in die Kammer eingeführt wird.

Mit der erfindungsgemäßen Lösung wird eine gleichmäßige und wirksame Abwasserverteilung über das Festbett und die Nutzung der vollen Festbettfläche erreicht. Da das Abwasser bei der erfindungsgemäßen Lösung zwischen der Belüftungseinrichtung und der Festbettunterseite und somit eng benachbart zur Belüftungseinrichtung in die Abwasserreinigungskammer eingeführt wird, wird das Abwasser ohne Stillstandsmöglichkeit sofort vom über die Belüftungseinrichtung eingeführten Sauerstoffträger in Bewegung versetzt und durchströmt das unmittelbar benachbarte Festbett. Hierdurch wird sichergestellt, daß das gerade in die Abwasserreinigungskammer eingeführte Abwasser sofort mit dem Festbett kontaktiert wird, so daß der hierdurch erzielte biologische Effekt und somit die Nutzung des Festbettes optimiert wird. Darüber hinaus wird das Abwasser im "frischen" Zustand über den vom Sauerstoffträger aufgeprägten Bewegungsimpuls gleichmäßig über das Festbett verteilt, so daß Toträume innerhalb des Festbettes bzw. der Abwasserreinigungskammer weitgehend vermieden werden. Bei der erfindungsgemäßen Lösung hat somit das Abwasser keinerlei Möglichkeit, in mögliche Stillstandszonen innerhalb der Abwasserreinigungskammer einzutreten und dort zu verharren, sondern es wird zwangsweise sofort nach seiner Einführung in Bewegung versetzt.

Das Festbett wird daher fortlaufend durchströmt, wobei dessen gesamte Fläche mit einbezogen wird. Das das Festbett durchströmende Abwasser gelangt zur Oberseite des Festbettes und wird von dort (das Festbett ist hierbei immer im Abwasser eingetaucht) durch das nachströmende Abwasser in die Außenbereiche der Abwasserreinigungskammer verdrängt. Es erfolgt im Außenbereich eine Abwärtsströmung bis unter das Festbett und von dort wiederum eine Aufwärtsströmung durch das Festbett. Insgesamt ergibt sich somit eine "Walzenströmung", die aufgrund des nachströmenden, neu eingeführten Abwassers eine permanente Durchströmung und somit optimale Nutzung des Festbettes sicherstellt. Hierdurch wird nicht nur eine gleichmäßige Abwasserverteilung über das Festbett, sondern auch eine gleichmäßige Versorgung des Festbettes mit Sauerstoff sichergestellt.

Das gereinigte Abwasser wird zweckmäßigerweise etwa auf der halben Höhe der Abwasserreinigungskammer aus dieser herausgeführt. Im Betrieb ist die Abwasserreinigungskammer vorzugsweise soweit mit Abwasser gefüllt, daß das Festbett voll eingetaucht ist.

Bei der verwendeten Belüftungseinrichtung kann es sich um irgendeine bekannte Standardbelüftungseinrichtung handeln, die beispielsweise Teller-, Rohr-, Schlauch- oder Platten-belüfter aufweist. Die Art der verwendeten Belüftungseinrichtung ist für die Erfindung nicht kritisch.

Vorzugsweise wird das Abwasser im Bereich der Festbettunterseite in die Abwasserreinigungskammer eingeführt. Hierdurch wird ein direkter Kontakt des Abwassers mit dem Festbett und eine besonders gleichmäßige Durchströmung desselben sichergestellt. Sauerstoff und Abwasser werden besonders gut auf das Festbett verteilt.

Bei einer speziellen Ausführungsform des erfindungsgemäßen Verfahrens wird das Abwasser nach unten gerichtet in die Kammer eingeführt, wobei insbesondere mit dem Abwasser bei seiner Einführung in die Kammer die Belüftungseinrichtung angeströmt wird. Hierdurch werden Verstopfungen der Abwasserabgabeeinrichtung vermieden. Gleichzeitig wird ein unmittelbarer Kontakt zwischen Abwasser und Sauerstoff bzw. Sauerstoffträger sichergestellt, der gewünscht wird und sich positiv auf den Wirkungsgrad des Verfahrens auswirkt.

In Weiterbildung der Erfindung wird das Abwasser bei seiner Einführung an mehreren Punkten in die Kammer abgegeben. Hierdurch wird sichergestellt, daß die Unterseite des Festbettes von Hause aus gleichmäßig mit dem Abwasser beaufschlagt wird. Je nach der Form der Unterseite des Festbettes kann eine verschiedene Zahl von Abgabepunkten vorhanden sein, um die gewünschte gleichmäßige Beaufschlagung zu sichern. So können beispielsweise bei einer quadratischen Form vier Abgabepunkte, bei einer dreieckigen Form drei Abgabepunkte, bei einer kreisförmigen Gestalt vier oder fünf Abgabepunkte etc. vorgesehen sein.

Ein besonders guter Effekt läßt sich erreichen, wenn man die Abgabepunkte des Abwassers jeweils einer Belüftungseinheit der Belüftungseinrichtung zuordnet. Mit anderen Worten, es wird hierbei vorgeschlagen, daß auch die Belüftungseinheit mehrere Sauerstoff- bzw. Luftabgabepunkte aufweist, wobei diesen Abgabepunkten jeweils ein Abwasserabgabepunkt zugeordnet ist. So kann die Belüftungseinrichtung beispielsweise mehrere Tellerbelüfter besitzen, und jedem Tellerbelüfter ist ein Abgabepunkt des Abwassers zugeordnet. Die Aufteilung in mehrere Abgabepunkte kann mit Hilfe eines geeigneten Verteilers realisiert werden. Durch diese Ausführungsform wird sichergestellt, daß das in die Kammer eingeführte Abwasser immer mit der über die Belüftungseinrichtung erzeugten Gasströmung in Kontakt tritt und somit in Richtung auf das Festbett mitgerissen und durch das Festbett geführt wird.

Die Erfindung betrifft ferner eine Kläranlage, insbesondere eine Kleinkläranlage oder kleine Kläranlage, zur Durchführung des vorstehend beschriebenen Verfahrens. Aus der eingangs genannten AT 000 107 U1 ist eine derartige Kläranlage bekannt, die mindestens eine Abwasserreinigungskammer mit darin angeordnetem Festbett und darunter angeordneter Belüftungseinrichtung, eine Abwasserzuführung in die Abwasserreinigungskammer und eine Abführung für das gereinigte Abwasser aus der Kammer aufweist. Wie bereits eingangs angedeutet, erfolgt hierbei die Abwasserzuführung über die Oberkante einer die Abwasserreinigungskammer begrenzenden Wand. Es ist ferner bekannt, die Abwasserzuführung über Schlitze durchzuführen, die etwa mittig in bezug auf die Höhe der Begrenzungswand angeordnet sind.

Die erfindungsgemäß ausgebildete Kläranlage ist nunmehr dadurch gekennzeichnet, daß die Abwasserzuführung eine zwischen der Festbettunterseite und der Belüftungseinrichtung in die Abwasserreinigungskammer mündende Abgabeeinrichtung umfaßt.

Die Vorteile dieser erfindungsgemäßen Lösung wurden bereits vorstehend in Verbindung mit dem erfindungsgemäßen Verfahren erläutert. Um Wiederholungen zu vermeiden, werden diese Vorteile nicht nochmals aufgeführt. Wesentlich ist, daß hierdurch eine wirksame und gleichmäßige Verteilung des "frischen" Abwassers und des bereits umgewälzten Abwassers sowie des Sauerstoffs über das Festbett sichergestellt wird.

Vorzugsweise mündet die Abgabeeinrichtung im Bereich der Festbettunterseite in die Kammer, und vorzugsweise nach unten.

Zweckmäßigerweise ist die Abgabeeinrichtung mit einem Verteilerkopf versehen, der vorzugsweise mehrere sternförmig verteilte Austrittsöffnungen aufweist. Jeweils eine Austrittsöffnung ist hierbei zweckmäßigerweise einer Belüftungseinheit der Belüftungseinrichtung zugeordnet. Dadurch werden die vorstehend bereits aufgezeigten Vorteile erreicht.

Die Abwasserzuführung besitzt vorzugsweise eine mit der Abgabeeinrichtung versehene, sich in die Abwasserreinigungskammer erstreckende Zuführleitung. Besonders gute Ergebnisse wurden mit einer Ausführungsform erzielt, bei der die Abwasserzuführleitung etwa im mittleren Höhenbereich des Festbettes seitlich in die Abwasserreinigungskammer eingeführt ist, sich dann seitlich am Festbett vorbei nach unten erstreckt und etwa horizontal unterhalb des Festbettes bis zur Abgabestelle verläuft. Die Abgabestelle ist dabei vorzugsweise im mittleren Bereich der Festbettunterseite angeordnet.

Ein weiteres Merkmal der Erfindung besteht darin, daß die Abwasserzuführleltung einen nach oben in den Raum über dem Abwasser führenden Entlüftungszweig aufweist.

Mit der vorstehend beschriebenen Ausführungsform gelingt es, das Abwasser zielgenau an die optimale Einführungsstelle in der Abwasserreinigungskammer zu führen, nämlich den Verteilerkopf mit seinen der Zahl der Belüftungseinheiten entsprechenden Abgabeöffnungen unterhalb des Festbettes in dessen mittleren Bereich anzuordnen. Die Abgabeöffnungen des Verteilerkopfes weisen nach unten, so daß die Oberseite der Belüftungseinheiten mit "frischem" Abwasser angeströmt wird. Es versteht sich, daß die hier beschriebene Kläranlage neben der eigentlichen Abwasserreinigungskammer auch Vorklär- und/oder Nachkläreinrichtungen aufweisen kann. So weist eine spezielle Ausführungsform der Kläranlage zusätzlich eine Vorklärkammer und eine Nachklärkammer auf. Wenn im Text von "frischem" Abwasser die Rede ist, dann bedeutet dies in der Regel Abwasser, das bereits eine Vorklarung durchlaufen hat. Die Abwasserzuführung erfolgt hierbei von der Vorklärkammer in die eigentliche Abwasserreinigungskammer.

Das aus der eigentlichen Abwasserreinigungskammer abgeführte gereinigte Abwasser gelangt vorzugsweise in die erwähnte Nachklärkammer, und zwar vorzugsweise über mindestens eine Öffnung zwischen der Abwasserreinigungskammer und der Nachklärkammer, die in bezug auf die Höhe der Abwasserreinigungskammer etwa mittig angeordnet ist.

Die Erfindung wird nachfolgend anhand eines Ausführungsbeispieles in Verbindung mit der Zeichnung im einzelnen erläutert. Es zeigen:
- Figur 1: einen schematischen Vertikalschnitt durch eine Kleinkläranlage;
- Figur 2: eine schematische Unteransicht der Abwasserreinigungskammer der Kleinkläranlage der Figur 1, wobei allerdings die Belüftungseinrichtung schematisch über der Abwasserabgabeeinrichtung dargestellt ist;
- Figur 3: eine entsprechende Ansicht wie Figur 2 mit Darstellung der Abwasserfließrichtung;
- Figur 4: den in Figur 5 dargestellten Schnitt B mit Darstellung der Verteilung des Abwassers über den Biofilm;
- Figur 5: eine Unteransicht der Abwasserreinigungskammer ohne Belüftungseinrichtung und Abwasserabgabeeinrichtung zur Darstellung von Schnitt A und Schnitt B;
- Figur 6: den in Figur 5 gezeigten Schnitt A mit einer Darstellung der Verteilung des Sauerstoffs über den Biofilm; und
- Figur 7: den in Figur 5 gezeigten Schnitt B mit einer Darstellung der Verteilung des Sauerstoffs über den Biofilm.

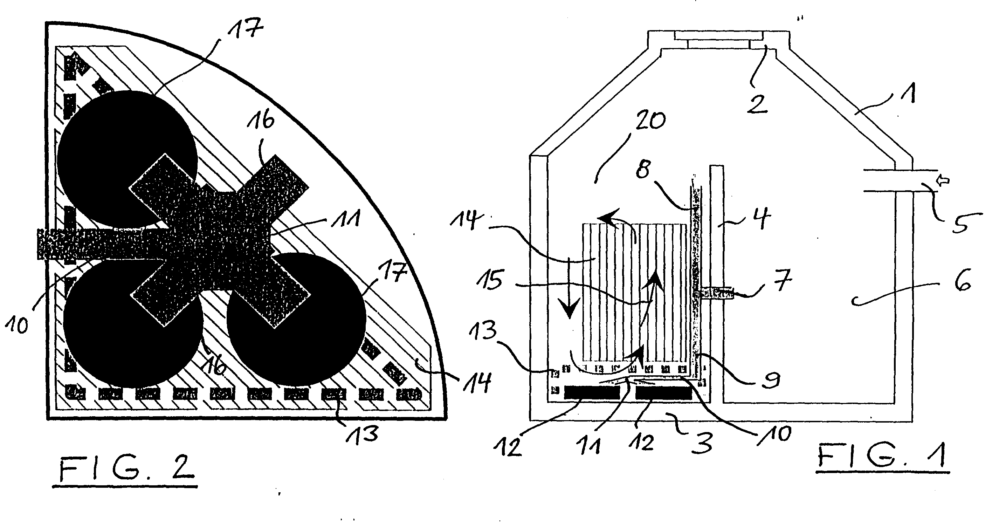

Die in Figur 1 im Vertikalschnitt dargestellte Kleinkläranlage ist im Querschnitt kreisförmig ausgebildet. Sie besteht aus einer Vorklärkammer 6, die die Hälfte des Kreises bildet, der eigentlichen Abwasserreinigungskammer 20, die einen Viertelkreis bildet, und einer Nachklärkammer (nicht gezeigt), die ebenfalls einen Viertelkreis bildet. Die Kläranlage besitzt ein etwa zylindrisches Gehäuse 1 mit einer Bodenwand 3 und einer konisch ausgebildeten Deckwand, die in eine horizontale Deckwand 2 übergeht, in der eine entsprechende Öffnung zum Begehen der Kläranlage vorgesehen ist. Zwischen der Vorklärkammer 6 und der Abwasserreinigungskammer 20 ist eine Wand 4 angeordnet.

In der eigentlichen Abwasserreinigungskammer 20 ist ein Festbett 14 angeordnet, das beispielsweise aus einer Vielzahl von Kunststoffkörperpaketen besteht. Das Festbett 14 ist auf einem Rost 13 gelagert. Im unteren Bereich der Kammer 20 befindet sich eine Belüftungseinrichtung 12, die aus insgesamt drei Tellerbelüftern 17 besteht (siehe Figur 2).

Das Abwasser gelangt in die Kleinkläranlage über eine geeignete Zuführöffnung 5 und von dort in die Vorklärkammer 6. Nach einer entsprechenden Vorklärung, die nicht Gegenstand der vorliegenden Erfindung ist, gelangt das vorgeklärte Abwasser über eine Abwasserzuführleitung 7 in die Abwasserreinigungskammer 20. Die Leitung 7 ist in bezug auf die Höhe der Zwischenwand 4 etwa mittig angeordnet und erstreckt sich durch diese. Sie mündet seitlich in die Kammer 20 ein und verzweigt sich in einen vertikal nach oben führenden Abschnitt 8, der zu Belüftungszwecken dient, und in einen vertikal nach unten führenden Abschnitt 9, der in einen horizontalen Endabschnitt 10 mündet. Am Ende des Abschnitts 10 ist ein Verteilerkopf 11 angeordnet, der deutlicher in Figur 2 gezeigt ist und in Verbindung mit Figur 2 nachfolgend beschrieben wird. Das Abwasser wird vom Verteilerkopf 11 nach unten gegen die Belüftungseinrichtung 12 abgegeben und von der von der Belüftungseinrichtung 12 abgegebenen Luft nach oben durch das Festbett 14 mitgeführt. Nach dem Durchströmen des Festbettes gelangt das Abwasser in den Außenbereich der Kammer und von dort entlang der Begrenzungswand wieder nach unten,so daß sich eine Walzenströmung ausbildet, wie mit den bei 15 dargestellten Pfeilen in Figur 1 gezeigt.

Figur 2 zeigt den horizontalen Abschnitt 10 der Abwasserzuführleitung, der in den Verteilerkopf 11 endet. Der Verteilerkopf 11 besitzt vier sternförmig angeordnete Abwasserabgabeöffnungen 16. Drei von diesen Abgabeöffnungen 16 sind jeweils einem Tellerbelüfter 17 zugeordnet, während die vierte Abgabeöffnung in einen Bereich außerhalb des Festbettes 14 mündet. Es ist darauf hinzuweisen, daß bei der Darstellung der Figur 2 die Belüftungseinrichtung (Tellerbelüfter 17) nicht unterhalb, sondern oberhalb des Verteilerkopfes 11 dargestellt ist. Es wird jedoch deutlich aus Figur 2, daß die Tellerbelüfter über die einzelnen Abgabeöffnungen 16 direkt mit Abwasser angeströmt werden.

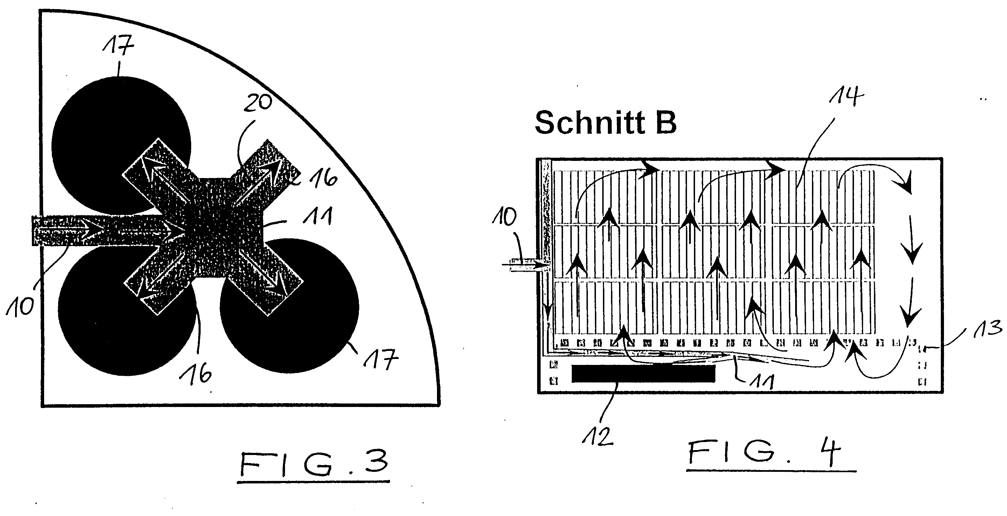

Figur 3 zeigt eine mit Figur 2 vergleichbare Darstellung, wobei die Fließrichtung des Abwassers durch entsprechende Pfeile 20 angedeutet ist.

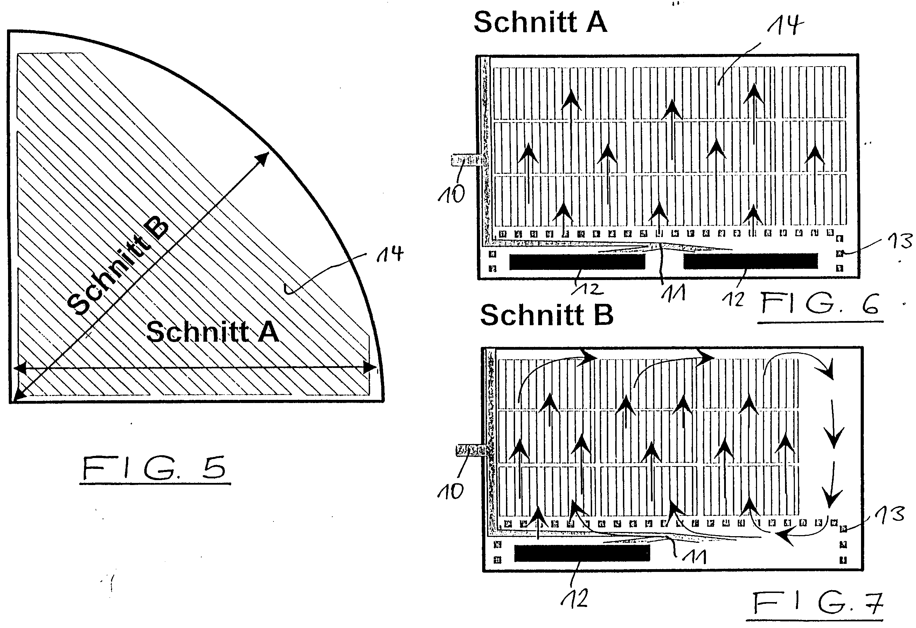

Figur 4 zeigt einen Schnitt durch die Kleinkläranlage in der in Figur 5 angedeuteten, mit Schnitt B bezeichneten Richtung. In Figur 4 ist die Verteilung des Abwassers über das Festbett 14, d.h. den Biofilm, gezeigt. Man erkennt, daß das vom Verteilerkopf 11 nach unten gegen die Belüftungseinrichtung 12 abgegebene Wasser durch die von der Belüftungseinrichtung 12 abgegebene Luft nach oben umgelenkt wird und das Festbett 14 durchströmt. Im oberen Endbereich des Festbettes erfolgt eine erneute Strömungsumlenkung in der Figur nach rechts und in den Freiraum neben dem Festbett wieder nach unten in den Bereich unterhalb des Festbettes. Es erfolgt dann eine erneute Aufströmung.

Das gereinigte Abwasser gelangt über eine Öffnung (nicht gezeigt), die in bezug auf die Höhe der Kammer 20 etwa mittig angeordnet ist, in die Nachklärkammer. In Betrieb ist das Festbett 14 immer im Abwasser eingetaucht.

Die Figuren 6 und 7, bei denen es sich um die in Figur 5 dargestellten Schnitte A und B handelt, zeigen die Verteilung des Sauerstoffs über das Festbett 14, d.h. den Biofilm. Figur 6 zeigt,daß die von der Belüftungseinrichtung 12 abgegebenen Luft bzw. der Sauerstoff das Festbett von unten nach oben etwa vertikal durchströmt. Schnitt B gemäß Figur 7 zeigt ebenfalls diese Vertikalströmung. Da hier jedoch zwischen Kammerwand und Festbettrand ein Freiraum besteht, erfolgt eine Umlenkung der Strömung des Sauerstoffs am Festbett vorbei wieder nach unten und vom unteren Bereich erneut durch das Festbett. Auf diese Weise wird die gewünschte Walzenströmung erzeugt.

Ergänzend sei noch erwähnt, daß das verwendete Festbett entsprechende Strömungskanäle aufweisen kann, um die gewünschte Vertikalströmung durch das Festbett zu begünstigen.

## Patentansprüche

1. Verfahren zur Reinigung von Abwasser, bei dem das Abwasser in eine Kammer eingeführt, mit einem in der Kammer befindlichen Festbett kontaktiert und das gereinigte Abwasser aus der Kammer herausgeführt wird, wobei das Festbett von unten über eine Belüftungseinrichtung mit Sauerstoff oder einem Sauerstoffträger angeströmt und durchströmt wird, dadurch gekennzeichnet, daß das Abwasser zwischen der Belüftungseinrichtung und der Festbettunterseite in die Kammer eingeführt wird.

2. Verfahren nach Anspruch 1, dadurch gekennzeichnet, daß das Abwasser im Bereich der Festbettunterseite in die Kammer eingeführt wird.

3. Verfahren nach Anspruch 1 oder 2, dadurch gekennzeichnet, daß das Abwasser nach unten gerichtet in die Kammer eingeführt wird.

4. Verfahren nach Anspruch 3, dadurch gekennzeichnet, daß mit dem Abwasser bei seiner Einführung in die Kammer die Belüftungseinrichtung angeströmt wird.

5. Verfahren nach einem der vorangehenden Ansprüche, dadurch gekennzeichnet, daß das Abwasser bei seiner Einführung an mehreren Punkten in die Kammer abgegeben wird.

6. Verfahren nach Anspruch 5, dadurch gekennzeichnet, daß die Abgabepunkte des Abwassers jeweils einer Belüftungseinheit der Belüftungseinrichtung zugeordnet sind.

7. Kläranlage, insbesondere Kleinkläranlage oder kleine Kläranlage, zur Durchführung des Verfahrens nach einem der Ansprüche 1 bis 6 mit mindestens einer Abwasserreinigungskammer mit darin angeordnetem Festbett und darunter angeordneter Belüftungseinrichtung, einer Abwasserzuführung in die Abwasserreinigungskammer und einer Abführung für das gereinigte Abwasser aus der Kammer, dadurch gekennzeichnet, daß die Abwasserzuführung eine zwischen der Festbettunterseite und der Belüftungseinrichtunge (12) in die Abwasserreinigungskammer (20) mündende Abgabeeinrichtung umfaßt.

8. Kläranlage nach Anspruch 7, dadurch gekennzeichnet, daß die Abgabeeinrichtung im Bereich der Festbettunterseite in die Kammer (20) mündet.

9. Kläranlage nach Anspruch 7 oder 8, dadurch gekennzeichnet, daß die Abgabeeinrichtung nach unten in die Kammer mündet.

10. Kläranlage nach einem der Ansprüche 7 bis 9, dadurch gekennzeichnet, daß die Abgabeeinrichtung mit einem Verteilerkopf (11) versehen ist.

11. Kläranlage nach Anspruch 10, dadurch gekennzeichnet, daß der Verteilerkopf (11) mehrere sternförmig verteilte Austrittsöffnungen (16) aufweist.

12. Kläranlage nach Anspruch 11, dadurch gekennzeichnet, daß jeweils eine Austrittsöffnung (16) einer Belüftungseinheit (17) der Belüftungseinrichtung (12) zugeordnet ist.

13. Kläranlage nach einem der Ansprüche 7 bis 12, dadurch gekennzeichnet, daß die Abwasserzuführung eine mit der Abgabeeinrichtung versehene, sich in die Abwasserreinigungskammer (20) erstreckende Zuführleitung (7) umfaßt.

14. Kläranlage nach Anspruch 13, dadurch gekennzeichnet, daß die Abwasserzuführleitung (7) etwa im mittleren Höhenbereich des Festbettes (14) seitlich in die Abwasserreinigungskammer (20) eingeführt ist, sich dann seitlich am Festbett (14) vorbei nach unten erstreckt und etwa horizontal unterhalb des Festbettes (14) bis zur Abgabestelle verläuft.

15. Kläranlage nach einem der Ansprüche 13 oder 14, dadurch gekennzeichnet, daß die Abwasserzuführleitung (7) einen nach oben in den Raum über dem Abwasser führenden Entlüftungszweig (8) aufweist.

16. Kläranlage nach einem der Ansprüche 7 bis 15, dadurch gekennzeichnet, daß sie zusätzlich eine Vorklärkammer (6) und eine Nachklärkammer aufweist.
